# EUROPEAN PATENT APPLICATION

(11) **EP 3 064 473 A1**
(43) Date of publication of application: **07.09.2016**
(21) Application number: 15157233.6
(22) Date of filing: 02.03.2015
(51) Int. Cl.: C01D 3/04, C01D 7/18, C01D 7/00, C01D 3/16

(54) **PROCESS FOR MANUFACTURING AN AQUEOUS SODIUM CHLORIDE SOLUTION**

(71) Applicant: Solvay SA, 1120 Bruxelles (BE)
(72) Inventor: Delplanche, Thierrry, 1435 Mont-Saint-Guibert (BE); Thijssen, Marc, 3090 Overijse (BE); Breugelmans, Dirk, 1800 Vilvoorde (BE)
(74) Representative: Teipel, Stephan

(57) **Abstract**

The present invention relates to a process for manufacturing an aqueous sodium chloride solution and the use of such solution for the manufacturing of crude sodium bicarbonate from SOLVAY ammonia process or for the manufacturing of soda ash.

## Description

The present invention relates to a process for manufacturing an aqueous sodium chloride solution and the use of such solution for the manufacturing of crude sodium bicarbonate from SOLVAY ammonia process or for the manufacturing of soda ash.

Waste of domestic or hospital origin usually contains substantial quantities of chlorinated compounds and sulfur containing compounds. Incineration of this waste consequently leads to the production of fumes contaminated with hydrogen chloride and sulfur oxides. It is therefore necessary to purify the fume before it is discharged into the atmosphere. A known technique for purifying such fume consists in treating it, by the dry or semi-wet route, with a basic sodium reagent, usually sodium bicarbonate or sodium carbonate (EP 0 603 218). The dust collected from this technique for purifying fume contains an appreciable quantity of sodium chloride, which is useful to upgrade for example in the form of aqueous solutions. The fume, however, also contains sulfur oxides which together with the basic sodium reagent react to sodium sulphate. Furthermore, the dust can contain heavy metals. Both, sodium sulphate and heavy metals should be avoided in aqueous sodium chloride solutions.

One process for manufacturing an aqueous sodium chloride solution starting from a solid material comprising sodium chloride and heavy metals is disclosed in US 6,645,458. In this process, the solid material is dispersed in water to produce an aqueous medium, calcium chloride is introduced into this aqueous medium and the obtained medium is alkalinized to precipitate the heavy metals in the form of metal hydroxides. Calcium carbonate is co-precipitated with the metal hydroxides in the aqueous medium by reaction between the calcium chloride and sodium carbonate contained in the solid material. The aqueous medium is preferably alkalinized to a pH value of between 8 and 12 using for example sodium hydroxide. In the example described in this document, dust obtained from the purification of smoke and containing sodium chloride, sodium carbonate, sodium sulphate and heavy metals is reacted with calcium chloride. At a molar ratio of calcium chloride to sodium carbonate of 1.00 brine comprising 213.1 g of sodium chloride and 14.1 g of sodium sulphate per kg of brine was obtained.

A process for removing an industrial residue containing sodium sulphate, in which the sodium sulphate in the residue is treated with calcium salt to precipitate calcium sulphate, which is sent to a rock salt deposit, from which an aqueous solution of sodium chloride is withdrawn, is described in US 5,135,734. Dusts containing sodium chloride, sodium carbonate and sodium sulphate obtained by purifying combustion gases are available in large quantities. Economically and environmentally it is desirable to recover the sodium chloride from this dust. Suitable processes for such recovery are described in the above cited prior art documents. However, the obtained aqueous sodium chloride solutions are rather diluted comprising, for example, only 213.1 g of sodium chloride as in the most efficient trial in US 6,645,458. Furthermore, the obtained aqueous sodium chloride solution still contains a rather high amount of sodium sulphate. An additional problem arises from the large quantities of dusts from which the sodium chloride is to be recovered. These large quantities result in large volumes of liquid from which an effective sedimentation of the undesired salts is time consuming and difficult. One possibility to handle these large volumes is described in US 5,135,734 by using a rock salt deposit as a reactor. However, in such "natural" reactors, the development of gases and the development of potentially swelling inert solids, like the expansive Ettringite is to be avoided. Thus, the process requires long-term chemical and geochemical stability.

Therefore, there is still a need for providing a further improved process for recovering sodium chloride from solids comprising other compounds like sodium carbonate and sodium sulphate as impurities. In particular, the process should provide an aqueous solution containing a high concentration of sodium chloride and a low concentration of sodium sulphate. The obtained aqueous sodium chloride solution should also have a low concentration of heavy metals. Furthermore, the above described problems regarding long-term chemical and geochemical stability should be addressed.

It has now been found that an aqueous solution with an increased sodium chloride concentration and a reduced amount of sodium sulphate can be obtained if the dust obtained from the purification of combustion gases with sodium carbonate or sodium bicarbonate is mixed with a solid material comprising calcium chloride in an aqueous liquid at a weight ratio between the aqueous liquid and the total weight of the two solids in a certain range of from 0.7 to 3.5. Consequently, the present invention relates to the following items:
1. A process for manufacturing an aqueous sodium chloride solution, comprising the steps of
   a) dispersing a first solid material comprising sodium chloride, sodium carbonate, and sodium sulphate, and a second solid material comprising calcium chloride in an aqueous liquid to produce an aqueous medium;
   b) subjecting the aqueous medium to clarification; and
   c) recovering the clarified aqueous medium as aqueous sodium chloride solution; characterized in that the weight ratio between the aqueous liquid used in the preparation of the aqueous medium and the total weight of the first solid material and the second solid material (L/S ratio) is in the range of from 0.7 to 3.5.
2. The process according to item 1 wherein the L/S ratio is in the range of from 1 to 2, preferably from 1.2 to 1.5, more preferably from 1.2 to 1.4, most preferably about 1.25.
3. The process according to item 1 or 2, wherein the pH of the aqueous medium in step a) is adjusted to ≤ 10, preferably to ≤ 9.5, more preferably to ≤ 9.
4. The process according to any of the preceding items, wherein the density of the aqueous medium in step a) is adjusted to ≥ 1.2 kg/l, preferably to ≥ 1.3 kg/l.
5. The process according to any of the preceding items, wherein the density of the aqueous medium in step a) is adjusted to ≤ 2 kg/l, preferably to ≤ 1.9 kg/l.
6. The process according to any of the preceding items, wherein the ratio of the first solid material to the second solid material and the amounts of first and second solid materials and aqueous liquid are adjusted to obtain an aqueous sodium chloride solution comprising ≥ 22%, preferably ≥ 23%, more preferably ≥ 25% by weight of dissolved sodium chloride based on the total weight of liquid fraction of the aqueous medium.
7. The process according to any of the preceding items, wherein the molar ratio of soluble calcium ions to the total amount of soluble carbonate, sulphate and optionally bicarbonate ions (Ca²⁺/(2 HCO₃⁻ + CO₃²⁻ + SO₄²⁻)) is adjusted to ≥ 1.00, preferably to ≥ 1.05.
8. The process according to any of the preceding items, wherein the clarification is performed by sedimentation, preferably in a rock salt cavern.
9. The process according to item 8, wherein the sedimentation is performed in a rock salt cavern, and the rock salt cavern is used as a reactor, and at least part of the sodium chloride solution is taken out of the rock salt cavern, and wherein the residence time of the aqueous sodium chloride solution in the rock salt cavern is at least 1 week, preferably at least 1 month, more preferably at least 3 months.
10. The process according to any of the preceding items, wherein the first solid material comprises from 20 to 800 g of sodium chloride, from 20 to 250 g of sodium carbonate and from 20 to 250 g of sodium sulphate, each per kg of first solid material.
11. The process according to any of the preceding items, wherein the second solid material comprises from 200 to 800 g of calcium chloride per kg of second solid material.
12. The process according to any of the preceding items, wherein the first and/or the second solid material additionally comprises heavy metals.
13. The process according to item 12, wherein heavy metals are selected among Cu, Zn, or mixtures thereof.
14. The process according to any of the preceding items, wherein the first solid material comprises dust obtained by subjecting fumes, contaminated with hydrogen chloride and sulphur oxides, to a treatment with sodium carbonate and/or sodium bicarbonate.
15. The process according to any of the preceding items, wherein the second solid material comprises dust obtained by subjecting fumes, contaminated with hydrogen chloride, to a treatment with calcium oxide, calcium carbonate and/or calcium hydroxide.
16. The process according to any of the preceding items, wherein the aqueous liquid is selected from water, an aqueous solution comprising sodium chloride and calcium chloride, or a mixture thereof.
17. The process according to item 16, wherein the aqueous liquid is an aqueous solution comprising sodium chloride and calcium chloride, and is derived from a distillation liquid from Solvay ammonia soda ash process.
18. The process according to any of the preceding items, wherein the recovered aqueous sodium chloride solution comprises at least 250 g of sodium chloride and less than 10 g, preferably less than 5 g of sulphate, calculated as SO₄²⁻ ions, each per kg of the aqueous sodium chloride solution.
19. The process according to item 18, wherein the recovered aqueous sodium chloride solution comprises at most 2 mg of Zn and/or at most 5 mg of Cu, each per kg of the aqueous sodium chloride solution.
20. The process according to any of the preceding items, comprising: d) subjecting the aqueous sodium chloride solution from step c) to calcium purification by adding sodium carbonate or by adding hydroxides ions (OH⁻) and carbon dioxide (CO₂) so that to precipitate at least part of calcium into calcium carbonate.
21. Use of the aqueous sodium chloride solution obtained by the process of any of items 1 to 20 for the manufacturing of crude sodium bicarbonate from SOLVAY ammonia process or for the manufacturing of soda ash.

In the process according to the invention, the solid materials are usually in the form of powders. Their origin is not critical. The first solid material generally is an industrial residue, for example residue from the purification of an industrial fluid, such as the dust obtained by the purification of combustion gases by treatment with sodium carbonate or sodium bicarbonate. In one embodiment the first solid material additionally comprises sodium bicarbonate.

The second solid material can be pure calcium chloride or a calcium chloride containing powder, such as dust obtained by subjecting fume, contaminated with hydrogen chloride, to a treatment with calcium oxide, calcium carbonate and/or calcium hydroxide. The calcium chloride may be present in its hydrate form. If both, the first solid material and the second solid material, are dusts obtained by the purification of combustion gases, the process of the current invention is of particular advantage because two solids which are otherwise waste products are employed for recovering sodium chloride.

The two solid materials may be introduced into the aqueous liquid simultaneously or subsequently whereby in the latter case, the first solid material may be introduced into the aqueous liquid prior to or after the second solid material.

As aqueous liquid for dispersing the first solid material and the second solid material either water or an aqueous solution comprising further ingredients, such as an aqueous solution comprising sodium chloride and calcium chloride, or a mixture thereof may be used. In one embodiment, the aqueous liquid is an aqueous solution comprising sodium chloride and calcium chloride, and is derived from a distillation liquid from SOLVAY ammonia soda ash process. The invention is characterized by the weight ratio between the aqueous liquid used in the preparation of the aqueous medium and the total weight of the first solid material and the second solid material (liquid/solid; L/S ratio). It has been found that this ratio is important for optimizing the process with respect to the rate of recycling (yield) of sodium chloride, the sodium chloride concentration in the obtained aqueous solution, the concentration of undesired sulphate in the obtained aqueous solution and the sedimentation of the precipitating solids.

It was found that the sedimentation of solids precipitating from the aqueous medium is particularly good if the L/S ratio is in the range of from 0.7 to 3.5. For L/S ratios of about 0.5 and about 4, the sedimentation of the precipitating solids was observed to be inadequate.

Furthermore, it was found that with increasing L/S ratio first the recycling efficiency of sodium chloride increases, but then with further increasing L/S ratio the recycling efficiency decreases. At the same time, the sulphate concentration in the obtained aqueous sodium chloride solution first decreases with increasing L/S ratio, but with further increasing L/S ratio the sulphate concentration starts increasing again. At the same time the sodium chloride concentration in the obtained aqueous solution increases with increasing L/S ratio. It was found that for the recycling rate and the sulphate concentration optimum values are obtained if the L/S ratio is in the range of from 1 to 2, preferably in the range of from 1.2 to 1.5, more preferably in the range of from 1.2 to 1.4 and most preferably if the L/S ratio is about 1.25.

In the context of the present invention, the recycling rate of sodium chloride is defined as the amount of sodium chloride in the obtained aqueous sodium chloride solution divided by the amount of sodium chloride in the first solid material. Desirably, the recycling rate should be at least 50% of the sodium chloride content in the first solid material.

The first and/or the second solid material may additionally comprise heavy metals. Such metals are in particular present if the materials are flue gas treatment residues, i.e. dusts which are obtained by purifying combustion gases with sodium carbonate or sodium bicarbonate (first solid material) or with calcium oxide, calcium carbonate and/or calcium hydroxide (second solid material).

The expression "heavy metals" is intended to designate metals whose density is at least equal to 5 g/cm³, as well as beryllium, arsenic, selenium and antimony, in accordance with the generally accepted definition ("Heavy Metals in Wastewater and Sludge Treatment Processes"; Vol. I, CRC Press, Inc; 1987; p.2). In the context of the present invention, aluminum is also considered as heavy metal. Important heavy metals which can be reduced by the process according to the invention are Cu, Zn, and mixtures thereof. For example, in the case of dust from the treatment of a gas containing hydrogen chloride with a basic sodium reagent, the solid material usually contains from 5 to 80 g of heavy metals per kg of solid material.

Upon contacting the first solid material with the second solid material in an aqueous medium calcium carbonate and calcium sulphate are precipitated. Simultaneously, the heavy metals are co-precipitated in the form of metal hydroxides. In order to facilitate the heavy metal hydroxide formation a high pH is desirable as suggested in US 6,654,458. However, the industrial recycling of sodium chloride from the dust obtained by purifying combustion gases requires very large amounts of first and second solid materials and, thus, aqueous liquid. Furthermore, the clarification of the aqueous medium, for example by sedimentation of calcium carbonate, calcium sulphate and heavy metal hydroxide requires a long time. Therefore, from an economic point of view, it is advantageous to store the aqueous medium for example in a rock salt cavern where the precipitates can settle very slowly on the ground of the cavern while the obtained clarified aqueous medium can be recovered from the upper part of the cavern as the desired aqueous sodium chloride solution. However, in this case as well as in other cases where the clarification step is conducted for example in a container or tank of sufficient size, it was found that if the pH of the aqueous medium is too high, there is a risk of gas development for example by the following reaction:

4 Al + 4 OH⁻ + 4 H₂O → 4 AlO₂⁻ + 6 H₂.

Furthermore, it was found that at high pH there is a risk that alumina, lime and gypsum in water react with each other, thereby forming Ettringite (Ca₆Al₂(SO₄)₃(OH)₁₂26H₂O). Ettringite is very expansive having a degree of swelling of about 7000%. Thus, the formation of Ettringite can damage containers, tanks or even rock salt caverns in which the aqueous medium is stored for clarification.

The present inventors found that while on the one hand a high pH is desirable for the precipitation of heavy metal hydroxides, the problems associated with gas formation and the formation of Ettringite at high pH can be avoided if the pH of the aqueous medium is adjusted to ≤10, preferably to ≤ 9,5, more preferably to ≤ 9. Thus, the pH of the aqueous medium in step a) preferably is in the range of from 8 to 10, more preferably in the range of from 8 to 9,5, even more preferably in the range of 8 to 9.

In the process according to the invention, clarification is an operating process in which the dispersion of one or more solid substances in a liquid is subjected to physical separation into a least one phase which has a high concentration of solid substance and a liquid phase which is substantially free of solid substance, with no change of state of either constituent of the aqueous medium, in particular without evaporation or solidification of the liquid. Examples of this operating process of clarification comprise filtration, centrifugation and sedimentation. In view of the high amounts of solid and liquid materials for which the process according to the invention is designed, sedimentation is the preferred clarification process. Most preferably, sedimentation takes place in a rock salt cavern.

In the process according to the invention, clarification is designed to separate the insoluble materials, particularly the precipitates of calcium carbonate, calcium sulphate and optionally heavy metal hydroxides, from the aqueous sodium chloride solution. In view of the large liquid volumes usually employed in the present process and in view of the small size of the precipitating particles sedimentation can take a considerable time. Therefore, in one embodiment, the sedimentation is performed in a rock salt cavern, and the rock salt cavern is used as a reactor. In this embodiment, the residence time of the aqueous sodium chloride solution in the rock salt cavern can for example be at least one week, preferably at least one month, more preferably at least three months. The residence time is defined as the time obtained by dividing the volume of the rock salt cavern by the mean exiting flow of the sodium chloride solution out of the rock salt cavern.

In particular, if clarification is performed by sedimentation, it was found to be advantageous if the density of the aqueous medium in step a) (measured at 23°C) is adjusted to ≥ 1.2 kg/l, preferably to ≥ 1.3 kg/l. This rather high density has the advantage that the aqueous medium when injected in the bottom of container, tank or rock salt cavern will stay there for a time sufficient for the sedimentation process. The clarified aqueous sodium chloride solution can then be removed from the top of the container, tank or rock salt cavern because of its lower density of for example only 1.2 kg/l or less.

On the other hand, the aqueous medium in step a) must still be pumpable in order to be introduced at the bottom of the container, tank or rock salt cavern. Therefore, the density of the aqueous medium should not be too high. It was found that the density of the aqueous medium obtained in step a) (at 23°C) preferably should be ≤ 2 kg/l, more preferably ≤ 1.9 kg/l.

It was furthermore found that the sedimentation of calcium carbonate, calcium sulphate and optionally heavy metal hydroxides from the aqueous medium at the bottom of the container, tank or rock salt cavern is facilitated if the obtained aqueous sodium chloride solution comprises ≥ 22%, preferably ≥ 23%, more preferably ≥ 25% by weight of dissolved sodium chloride based on the total weight of the aqueous sodium chloride solution. Preferably, the aqueous sodium chloride solution is saturated in sodium chloride. The amount of sodium chloride in the aqueous sodium chloride solution can be adjusted by adjusting the ratio of the first solid material to the second solid material and the amount of first and second solid materials dispersed in the aqueous liquid.

When the solid materials are dispersed in the aqueous liquid at least the sodium chloride, sodium carbonate, optionally sodium bicarbonate, sodium sulphate, calcium chloride and calcium hydroxide will dissolve. From this solution, calcium carbonate and calcium sulphate will precipitate. It was found that in order to effectively remove the undesired salts from the aqueous sodium chloride solution by precipitation, the molar ratio of soluble calcium ions to the total amount of soluble carbonate, optionally bicarbonate and sulphate ions (Ca²⁺/(2 HCO₃⁻ + CO₃²⁻ + SO₄²⁻)) is adjusted to ≥ 1.00, preferably to ≥ 1.05. In this context, soluble calcium, carbonate, bicarbonate and sulphate ions are defined as the total amount of these ions from the first and second solid material and, if applicable, from the aqueous liquid, which are soluble in the aqueous medium and which thus can react with each other in order to precipitate the corresponding calcium carbonate, calcium bicarbonate and calcium sulphate. The total amount of soluble calcium ions can be determined by gravimetric titration after reaction with sodium carbonate. The total amount of carbonate and bicarbonate ions can be determined by pH titration and the total amount of sulphate ions can be determined by spectrophotometry or ionic chromatography. The total amount of soluble carbonate, bicarbonate and sulphate irons relates to the amount of sulphate, bicarbonate and carbonate ions being present in the first and second solid material and being soluble in the aqueous liquid. Thus, the soluble carbonate, bicarbonate and sulphate ions are those which can be precipitated from the aqueous medium.

Calcium ions as well as carbonate, bicarbonate and sulphate ions which are not soluble in the aqueous liquid, such as for example calcium sulphate being present for example in the second solid material, are not part of the soluble calcium ions and the soluble carbonate, bicarbonate and sulphate ions.

The first solid and the second solid material are dispersed in an aqueous liquid to produce an aqueous medium. The aqueous liquid may be water or a solution of salts such as calcium chloride and sodium chloride in water, or a mixture of both. In case that the aqueous liquid contains sodium chloride and/or calcium chloride or other salts, the amounts of these salts do not add to the solids in the calculation of the L/S ratio but these salts do add to the soluble calcium ions and soluble carbonate, bicarbonate and sulphate ions when adjusting the molar ratio of the soluble calcium ions to the total amount of soluble carbonate, bicarbonate and sulphate ions.

In one particular embodiment of the process according to the invention, the first solid material comprises from 20 to 800 g of sodium chloride, from 50 to 250 g of sodium carbonate and from 20 to 250 g of sodium sulphate, each per kg of first solid material. Optionally, the first solid material may additionally comprise up to 100 g of sodium bicarbonate, up to 80 g of heavy metals, each per kg of first solid material. The first solid material may also comprise inert solids.

In another particular embodiment of the process according to the invention, the second solid material comprises from 300 to 700 g of calcium chloride per kg of second solid material. The second solid material may optionally further comprise up to 80 g of sodium chloride, up 60 g of sodium sulphate, up to 50 g of calcium hydroxide and up to 50 g of CaOHCl, each per kg of the second solid material.

Additionally, the second solid material may comprise up to 80 g of heavy metals per kg of second solid material and optionally inert solids.

If the aqueous liquid used for dispersing the first and the second solid material is or comprises a solution of salts, such solution preferably comprises 10 to 200 g of sodium chloride and 50 to 600 g of calcium chloride, each per kg of the solution. If the aqueous liquid is a mixture of water and the solution of salts, the mixture can for example comprise from 90 to 99% of water and from 1 to 10% of the salt solution.

The aqueous sodium chloride solution obtained at the end of the process according to the invention is characterized by a high purity and finds, as a result, various applications in industry. In one embodiment, the recovered aqueous sodium chloride solution comprises at least 250 g of sodium chloride and less than 10 g, preferably less than 5 g of sulphate, calculated as SO₄²⁻, each per kg of the aqueous sodium chloride solution. In a further embodiment, the aqueous sodium chloride solution comprises at most 2 mg of Zn and/or at most 5 mg of Cu, each per kg of the aqueous sodium chloride solution. Such highly concentrated solution of high purity can in particular serve as a raw material for the manufacturing of crude sodium bicarbonate from SOLVAY ammonia process, for the manufacturing of soda ash (sodium carbonate) by the ammonia-soda process (also called "SOLVAY process"), for the electrochemical manufacturing of chlorine and of aqueous sodium hydroxide solutions, as well as for the manufacturing of solid salt.

The following examples serve to illustrate the invention.

### Example 1

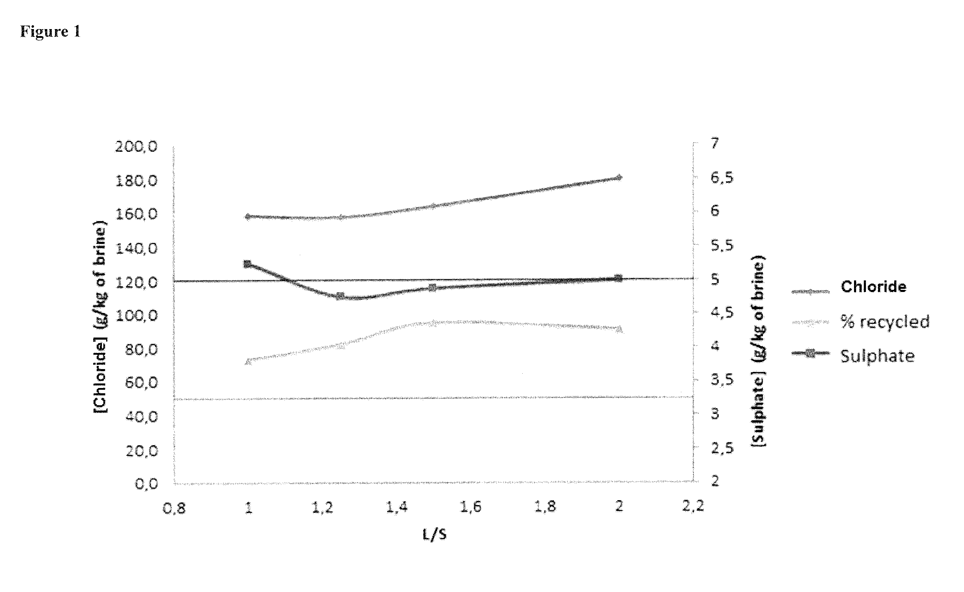

In a pilot plant, the first solid material comprising sodium chloride, sodium carbonate, sodium hydrogen carbonate, sodium sulphate and inert solids, and the second solid material comprising calcium chloride, calcium sulphate and inert solids were dispersed in an aqueous liquid so that the molar ratio of soluble calcium ions to the total amount of soluble carbonate and sulphate ions was 1.05. The L/S ratio of the obtained aqueous medium was varied and the amounts of chloride and sulphate in the recovered aqueous sodium chloride solutions were measured. The results are shown in attached Figure 1.

### Example 2

In a pilot plant, 662 g of a first solid material comprising 423 g of sodium chloride, 143 g of sodium carbonate, 17 g of sodium hydrogen carbonate, 122 g of sodium sulphate and 250 g of inert solids per kg of first solid material, and 338 g of a second solid material comprising 528 g of calcium chloride and 182 g of inert solids per kg of second solid material were dispersed in 1.25 kg of aqueous liquid so that the molar ratio of soluble calcium ions to the total amount of soluble carbonate, hydrogen carbonate and sulphate ions was 1.05. The L/S ratio of the obtained aqueous medium was 1.25. The obtained aqueous sodium chloride solution had a content of 260 g of NaCl and 4.7 g of sulphate, calculated as SO₄²⁻, each per kg of the aqueous sodium chloride solution.

### Example 3

The above example 1 was repeated at an L/S ratio of 1.2. The concentrations of heavy metals Cu and Zn in the aqueous medium were measured over time. The results are summarized in Table 1.

**Table 1**

| **Time** | **Cu [mg/kg]** | **Zn [mg/kg]** |
|---|---|---|
| 0 | 7.4 | 342.3 |
| 1 hour | 9.8 | 181.7 |
| 1 day | 2.7 | 22.4 |
| 1 week | 1.7 | 6.8 |
| 1 month | **1.5** | **1.1** |
| % Reduction | **80%** | **99%** |

## Claims

1. A process for manufacturing an aqueous sodium chloride solution, comprising the steps of
a) dispersing a first solid material comprising sodium chloride, sodium carbonate, and sodium sulphate, and a second solid material comprising calcium chloride in an aqueous liquid to produce an aqueous medium;
b) subjecting the aqueous medium to clarification; and
c) recovering the clarified aqueous medium as aqueous sodium chloride solution; **characterized in that** the weight ratio between the aqueous liquid used in the preparation of the aqueous medium and the total weight of the first solid material and the second solid material (L/S ratio) is in the range of from 0.7 to 3.5.

2. The process according to claim 1 wherein the L/S ratio is in the range of from 1 to 2, preferably from 1.2 to 1.5, more preferably from 1.2 to 1.4, most preferably about 1.25.

3. The process according to claim 1 or 2, wherein the pH of the aqueous medium in step a) is adjusted to ≤ 10, preferably to ≤ 9.5, more preferaby ≤ 9.

4. The process according to any of the preceding claims, wherein the density of the aqueous medium in step a) is adjusted to ≥ 1.2 kg/l, preferably to ≥ 1.3 kg/l.

5. The process according to any of the preceding claims, wherein the ratio of the first solid material to the second solid material and the amounts of first and second solid materials and aqueous liquid are adjusted to obtain an aqueous sodium chloride solution comprising ≥ 22%, preferably ≥ 23%, more preferably ≥ 25% by weight of dissolved sodium chloride based on the total weight of the aqueous sodium chloride solution.

6. The process according to any of the preceding claims, wherein the molar ratio of soluble calcium ions to the total amount of soluble carbonate, sulphate and optinally bicrbonate ions (Ca²⁺/(2 HCO₃⁻ + CO₃²⁻ + SO₄²⁻)) is adjusted to ≥ 1.00, preferably to ≥ 1.05.

7. The process according to any of the preceding claims, wherein the clarification is performed by sedimentation, preferably in a rock salt cavern.

8. The process according to claim 7, wherein the sedimentation is performed in a rock salt cavern, and the rock salt cavern is used as a reactor, and at least part of the sodium chloride solution is taken out of the rock salt cavern, and wherein the residence time of the aqueous sodium chloride solution in the rock salt cavern is at least 1 week, preferably at least 1 month, more preferably at least 3 months.

9. The process according to any of the preceding claims, wherein the first solid material comprises from 20 to 800 g of sodium chloride, from 20 to 250 g of sodium carbonate and from 20 to 250 g of sodium sulphate, each per kg of first solid material.

10. The process according to any of the preceding claims, wherein the second solid material comprises from 200 to 800 g of calcium chloride per kg of second solid material.

11. The process according to any of the preceeding claims, wherein the first solid material comprises dust obtained by subjecting fumes, contaminated with hydrogen chloride and sulphur oxides, to a treatment with sodium carbonate and/or sodium bicarbonate.

12. The process according to any of the preceding claims, wherein the second solid material comprises dust obtained by subjecting fumes, contaminated with hydrogen chloride, to a treatment with calcium oxide, calcium carbonate and/or calcium hydroxide.

13. The process according to any of the preceding claims, wherein the aqueous liquid is selected from water, an aqueous solution comprising sodium chloride and calcium chloride, or a mixture thereof.

14. The process according to any of the preceding claims, wherein the recovered aqueous sodium chloride solution comprises at least 250 g of sodium chloride and less than 10 g, preferably less than 5 g of sulphate, calculated as SO₄²⁻ ions, each per kg of the aqueous sodium chloride solution.

15. Use of the aqueous sodium chloride solution obtained by the process of any of claims 1 to 14 for the manufacturing of crude sodium bicarbonate from SOLVAY ammonia process or for the manufacturing of soda ash.
